# EUROPÄISCHE PATENTSCHRIFT

(11) **EP 2 454 120 B1**
(45) Veröffentlichungstag und Bekanntmachung des Hinweises auf die Patenterteilung: **13.05.2015**
(21) Anmeldenummer: 10734082.0
(22) Anmeldetag: 08.07.2010
(51) Int. Cl.: B60L 11/18, H02J 7/02, B60K 1/04, B60S 5/06

(54) **ENERGIEVERSORGUNGSEINHEIT, LANDFAHRZEUG, AUSTAUSCHSTATION UND VERFAHREN ZUM AUSTAUSCH EINER IN EINEM LANDFAHRZEUG ENTHALTENEN ENERGIEVERSORGUNGSEINHEIT**
POWER SUPPLY UNIT, LAND VEHICLE, SERVICE STATION AND METHOD FOR EXCHANGING A POWER SUPPLY UNIT IN A LAND VEHICLE
UNITÉ D'ALIMENTATION ÉLECTRIQUE, VÉHICULE TERRESTRE, STATION DE SERVICE ET PROCÉDÉ D'ÉCHANGE D'UNE UNITÉ D'ALIMENTATION ÉLECTRIQUE DANS UN VÉHICULE TERRESTRE

(30) Priorität: 14.07.2009 DE 102009033235
(43) Veröffentlichungstag der Anmeldung: 23.05.2012
(73) Patentinhaber: Conductix-Wampfler GmbH, 79576 Weil am Rhein-Märkt (DE)
(72) Erfinder: WECHLIN, Mathias, 79400 Kandern (DE); GREEN, Andrew, 79429 Malsburg-Marzell (DE)
(74) Vertreter: Wohlfarth, Ulrich
(86) Internationale Anmeldenummer: PCT/EP2010/059786
(87) Internationale Veröffentlichungsnummer: WO 2011/006820

(56) Entgegenhaltungen:
- DE-A1-102007 054 396
- FR-A1- 2 880 476
- GB-A- 2 353 151
- BLEIJS C A ET AL: "A FULLY AUTOMATIC STATION USING INDUCTIVE CHARGING TECHNIQUES" EVS - 13. 13TH. INTERNATIONAL ELECTRIC VEHICLE SYMPOSIUM. OSAKA, OCT. 13 - 16, 1996. SESSIONS 1A - 4H; [EVS. INTERNATIONAL ELECTRIC VEHICLE SYMPOSIUM], TOKYO, JEVA, JP, Bd. SYMP. 13, 13. Oktober 1996 (1996-10-13), Seiten 742-747, XP000687940

## Beschreibung

Die Erfindung betrifft eine Energieversorgungseinheit nach dem Oberbegriff des Anspruchs 1, ein Landfahrzeug nach dem Oberbegriff des Anspruchs 5 sowie eine Austauschstation und ein Verfahren zum Austausch einer in einem Landfahrzeug enthaltenen Energieversorgungseinheit.

Bei bekannten Landfahrzeugen, insbesondere Radfahrzeugen wie Automobilen, wird zunehmend der Einsatz von Elektromotoren als zusätzlicher oder alleiniger Antriebsmotor vorgesehen. Zur Versorgung dieser Elektromotoren mit elektrischer Energie sind auf den Radfahrzeugen, im weiteren auch kurz als Fahrzeug bezeichnet, wiederaufladbare elektrische Energiespeicher in Form einer wiederaufladbaren Fahrzeugbatterie vorgesehen. Wie bei einem herkömmlichen Kraftstoff betriebenen Landfahrzeugen wird die Fahrzeugbatterie durch den Fahrbetrieb des Fahrzeugs entladen und müssen nach einer bestimmten Zeit wieder "aufgetankt", also elektrisch aufgeladen werden. Hierzu ist aus dem Stand der Technik eine Vielzahl von unterschiedlichsten Lösungen bekannt, die das sofortige Laden der Energiespeicher ermöglichen. Derartige Elektro-"Tankstellen" weisen jedoch gegenüber den herkömmlichen Tankstellen für kraftstoffbetriebene Verbrennungsmotoren den gravierenden Nachteil auf, dass bei den derzeit bekannten elektrischen Energiespeichern, insbesondere aufladbare Batterien oder Akkumulatoren, die durchschnittliche Ladezeit bis zur vollständigen Ladung der Energiespeicher im Bereich von Stunden liegt und somit deutlich länger ist als das Befüllen eines Fahrzeugtanks mit flüssigem oder gasförmigen Kraftstoff. Da die Benutzer es jedoch gewohnt sind, einen Tankvorgang innerhalb weniger Minuten durchzuführen, stellt dieses Problem einen maßgeblichen Hinderungsgrund für den Einsatz von ausschließlich mit elektrischen Antriebsmotoren ausgerüsteten Fahrzeugen dar.

Um diesen Nachteil zu überwinden, existieren bereits Lösungen, um die entladene Fahrzeugbatterie möglichst schnell durch eine aufgeladene Fahrzeugbatterie auszutauschen. Bleibt ein Fahrzeug jedoch aufgrund einer entladenen Fahrzeugbatterie entfernt von einer entsprechenden Batterieaustauschstation liegen, so ist ein Austausch der entladenen Fahrzeugbatterie aufgrund ihres großen Gewichts nicht ohne weiteres möglich. Anders als bei kraftstoffbetriebenen Fahrzeugen, bei denen notfalls der für das Weiterfahren bis zur nächsten Tankstelle nötige Kraftstoff in einem tragbaren Kanister von einer Tankstelle zum Fahrzeug getragen werden kann, ist dies mit den Dutzenden von Kilo schweren Fahrzeugbatterien nicht möglich. In diesem Fall muss das Fahrzeug also mit einem Abschleppwagen bis zur nächsten Batterietauschstation geschleppt werden.

Andere Lösungen zum Wiederaufladen von Fahrzeugbatterien sehen vor, dass die Fahrzeugbatterie mittels einer am Erdboden einer Ladestation angeordneten Primärspule und einer an der Unterseite des Fahrzeugs angeordneten Sekundärspule induktiv geladen werden kann. Solche Ladestationen können beispielsweise in der heimischen Garage des Fahrzeugbesitzers oder an öffentlichen Parkplätzen vorgesehen werden, wo die Fahrzeuge entweder mittels einer Kurzladung von wenigen Minuten teilweise oder mittels einer lang andauernden Vollaufladung über mehrere Stunden hinweg geladen werden können. Da aber sowohl die Fahrzeugbatterie als auch die Sekundärspule relativ viel Bauraum des Fahrzeugs benötigen und beide von der Außenseite des Fahrzeugs leicht zugänglich sein müssen - die Fahrzeugbatterie zum einfachen und schnellen Austausch und die Sekundärspule zum guten induktiven Koppeln mit der Primärspule, reicht besonders bei kleinen oder mittleren Fahrzeugen der Platz auf der Fahrzeugunterseite nicht aus, um sowohl die Sekundärspule als auch die austauschbaren Fahrzeugbatterien dort anzubringen. Hierdurch wird eine Kombination beider Lösungen verhindert und ist auch nicht aus dem Stand der Technik bekannt.

Die DE 10 2007 054 396 A1 betrifft eine herkömmliche Kraftfahrzeug-Batterie mit einer in einer Seitenwand der Batterie angeordneten spulenförmige Leiteranordnung. Zum Aufladen der Batterie müsste das Ladegerät möglichst nahe an der Seitenwand der Batterie angeordnet werden, um eine ausreichende Kopplung mit einer spulenförmigen Leiteranordnung des Ladegeräts herzustellen. Aufgrund des begrenzten Bauraums im Motorraum von Kraftfahrzeugen ist dies aber im eingebauten Zustand der Batterie de facto nicht möglich, die spulenförmigen Leiteranordnung des Ladegeräts muss deshalb außerhalb des Motorraums angeordnet werden. Hierdurch ergibt sich eine schlechte magnetische Kopplung der spulenförmigen Leiteranordnungen und somit hohe Streu- und Übertragungsverluste.

Die DE 24 10 102 A1 betrifft eine Einrichtung zum Wechseln der Batterien von batteriebetriebenen Fahrzeugen mit senkrecht zur Fahrtrichtung an die in Wechselstellung fixierbaren Fahrzeuge heranfahrbaren Wechselwagen zur Aufnahme bzw. Abgabe der Batterien. Die DE 694 25 511 T2 betrifft ein Batterielade- und -transfersystem, bei denen eine austauschbare Fahrzeugbatterie seitlich in ein Fahrzeug eingeschoben bzw. aus dem Fahrzeug herausgezogen wird. Beiden bekannte Einrichtungen weisen den Nachteil auf, dass durch das seitliche Einschieben die Austauschvorrichtungen viel Platz benötigen und Sicherheitsvorkehrungen getroffen werden müssen, die ein Begehen des Raums seitlich des Fahrzeugs während des Batterietauschs sicher verhindern.

Die US 5 998 963 A betrifft eine Austausch- und Ladestation für die Batterien von Elektrofahrzeugen. Dieses weist den Nachteil auf, dass die Batterien dort zum Laden elektrische leitenden mit Kontakten an der Ladestation verbunden werden müssen.

Es ist deshalb Aufgabe der vorliegenden Erfindung, eine Energieversorgungseinheit zur Versorgung eines elektrischen Bordnetzes eines Landfahrzeugs, ein Landfahrzeug sowie eine Austauschstation und ein Verfahren zum Austausch einer in einem Landfahrzeug enthaltenen Energieversorgungseinheit bereitzustellen, welche die oben genannten Nachteile überwinden und eine platzsparende Anordnung von elektrischem Energiespeicher und Sekundärspule im Fahrzeug und sowohl die Ladung des elektrischen Energiespeichers im Landfahrzeug als auch den schnellen Austausch des elektrischen Energiespeichers zu ermöglichen.

Diese Aufgabe löst die Erfindung mit einer Energieversorgungseinheit mit den Merkmalen des Anspruchs 1, ein Landfahrzeug mit den Merkmalen des Anspruchs 5, sowie eine Austauschstation und ein Verfahren zum Austausch einer in einem Landfahrzeug enthaltenen Energieversorgungseinheit mit den Merkmalen des Anspruchs 9 bzw. 13. Vorteilhafte Ausgestaltungen und zweckmäßige Weiterbildungen der Erfindung sind in den Unteransprüchen angegeben.

Die eingangs genannte Energieversorgungseinheit ist erfindungsgemäß dadurch gekennzeichnet, dass sie als austauschbare Gesamteinheit mit einem Verbindungselement zur Verbindung mit einem am Landfahrzeug angeordneten Verbindungsgegenstück zur Energieübertragung zwischen Energieversorgungseinheit und Bordnetz ausgebildet ist, wobei die Energieversorgungseinheit als Verbindungselement eine Bordnetz-Primärspule zur induktiven Energieübertragung zwischen der Bordnetz-Primärspule und dem als Bordnetz-Sekundärspule ausgebildeten Verbindungsgegenstück am Landfahrzeug vorsehen ist. Dies ermöglicht ein einfaches Einsetzen und Entnehmen der Energieversorgungseinheit in ein eingangs genanntes Landfahrzeug mit den kennzeichnenden Merkmalen, dass es zur Aufnahme einer Energieversorgungseinheit ausgebildet ist und ein Verbindungsgegenstück zur Verbindung mit dem Verbindungselement der Energieversorgungseinheit aufweist, wobei das Verbindungsgegenstück eine Bordnetz-Sekundärspule zur induktiven Energieübertragung zwischen der Bordnetz-Sekundärspule und dem als Bordnetz-Primärspule ausgebildeten Verbindungselement ist. Gleichwohl erlaubt es die Energieversorgungseinheit auch, das Landfahrzeug durch Kurz- oder Gelegenheitsladungen an Ladestationen ohne Ausbau der Energieversorgungseinheit zu laden. Zudem ermöglicht die erfindungsgemäße Energieversorgungseinheit bei weitgehender Entladung einen schnellen Austausch in einer erfindungsgemäßen Austauschstation gegen eine vollständig geladene andere Energieversorgungseinheit. Die bisher notwendigen langen Stillstandszeiten des Landfahrzeugs während des Ladens und die damit verbundenen Wartezeiten werden hierdurch vermieden. Die Integration von Sekundärspule und Energiespeicher in eine austauschbare Gesamteinheit erlaubt zudem ein einfaches, berührungsfreies und somit weitgehend gefahrloses Laden der in der Energieversorgungseinheit enthaltenen Energiespeicher in einer erfindungsgemäßen Austauschstation. Zudem kann durch die Erfindung der Austausch der Energieversorgungseinheit in einer Austauschstation vollständig automatisiert durchgeführt werden, da zum Laden der Energiespeicher der Energieversorgungseinheit in der Austauschstation keine berührenden Verbindungen zu Ladegeräten hergestellt werden müssen.

Da die Energieversorgungseinheit als Verbindungselement eine Bordnetz-Primärspule zur induktiven Energieübertragung zwischen der Bordnetz-Primärspule und dem als Bordnetz-Sekundärspule ausgebildeten Verbindungsgegenstück am Landfahrzeug vorsieht, hierdurch die Energieübertragung von einer außerhalb des Landfahrzeugs angeordneten Primärspule auf die Energieversorgungseinheit als auch die Energieübertragung von Energieversorgungseinheit zum Bordnetz induktiv, also berührungslos erfolgt, sind keinerlei mechanische Kontakte zur Energieübertragung zwischen Energieversorgungseinheit und Ladegerät oder Bordnetz notwendig. Somit kann die Energieversorgungseinheit als vollständig gekapselte Gesamteinheit ausgebildet werden, wodurch das Eindringen von Staub, Feuchtigkeit oder anderen Gegenständen in die Energieversorgungseinheit sicher vermieden wird. Auch brauchen keine zusätzlichen Schutzmaßnahmen ergriffen werden, um elektrischen Kontakte gegen Berührung von Personen oder Gegenständen zu sichern. Eine derartige Energieversorgungseinheit benötigt keine mechanisch bewegbaren Teile, so dass diese nicht mehr regelmäßig auf Gängigkeit kontrolliert werden müssen und das regelmäßige Gängigmachen der mechanisch bewegten Teile entfällt.

Eine weitere vorteilhafte Ausbildung der Erfindung kann mindestens ein Kupplungselement zur schnellen mechanischen Verbindung mit mindestens einem am Landfahrzeug vorgesehenen Kupplungsgegenstück aufweisen. Hierdurch kann die Energieversorgungseinheit auf einfache und schnelle Weise fest mit dem Fahrzeug verbunden und andererseits schnell und einfach von diesem gelöst werden. Hierdurch lässt sich ein automatisierter Austausch der Energieversorgungseinheit leicht bewerkstelligen. Hierzu kann vorteilhaft auch mindestens ein Positionierelement zum Eingriff mit mindestens ein am erfindungsgemäßen Landfahrzeug angeordnetem Positioniergegenstück vorgesehen werden, um beim Einsetzen der Energieversorgungseinheit ins Landfahrzeug das oder die Verbindungselemente und das oder die Verbindungsgegenstücke einfach und genau zueinander zu positionieren.

Eine erfindungsgemäße Austauschstation weist zum Austausch einer in einem erfindungsgemäßen Landfahrzeug enthaltenen ersten Energieversorgungseinheit durch eine in einem Lager der Austauschstation bevorratete zweite Energieversorgungseinheit eine bodenseitig angeordneten Wechselvorrichtung zur Entnahme der ersten Energieversorgungseinheit vom Landfahrzeug und zur Übergabe der ersten Energieversorgungseinheit an eine Transportvorrichtung zum Transport der ersten Energieversorgungseinheit in das Lager und der zweiten Energieversorgungseinheit aus dem Lager zur Wechselvorrichtung. Hierdurch lässt sich ein schneller Austausch der Energieversorgungseinheit bewerkstelligen, welcher etwa so lange dauert wie ein Tankvorgang bei einem kraftstoffbetriebenen Landfahrzeug.

Um eine aus dem Landfahrzeug entnommene entladene Energieversorgungseinheit schnell und einfach wieder Aufladen zu können, kann vorteilhaft im Lager der die Austauschstation eine oder mehrere Aufnahmen mit je einer Lade-Primärspule zur induktiven Energieübertragung zwischen der Lade-Primärspule und der Sekundärspule der in der Aufnahme gelagerten Energieversorgungseinheit vorgesehen werden.

In einer platzsparenden und für den Austausch vorteilhaften Ausführung kann die Wechselvorrichtung eine in einer zwischen zwei Fahrspuren für ein zweispuriges Landfahrzeug verlaufenden Grube angeordnete Hubvorrichtung mit einer vertikal verfahrbaren Auflage für die Energieversorgungseinheit aufweisen. Hierdurch kann eine an der Unterseite des Landfahrzeugs angeordnete Energieversorgungseinheit schnell und ungefährlich entnommen werden. Auch kann der weitere Austausch dann unterirdisch erfolgen, so dass kein großer oberirdischer Platzbedarf notwendig ist. So könnten bereits vorhandene Kraftstofftankstellen einfach ohne zusätzlichen oberirdischen Platzbedarf in Austauschstationen umgebaut werden. Da bei den herkömmlichen Tankstellen die im Boden angeordneten großen Tanks dann ohnehin ausgebaut werden müssen, halten sich die Aushubarbeiten ebenso in Grenzen.

In einer bevorzugten Ausführung kann eine Steuervorrichtung zum automatisierten Wechseln der Energieversorgungseinheit vorgesehen werden, um möglichst wenig Bedienpersonal zu benötigen und das vorhandene Bedienpersonal möglichst wenig zu gefährden.

Ein erfindungsgemäßes Verfahren zum Austausch einer in einem Landfahrzeug enthaltenen ersten Energieversorgungseinheit durch eine zweite Energieversorgungseinheit umfasst die folgenden Schritte: a) Positionieren des Landfahrzeugs in einem Wechselbereich einer Wechselvorrichtung, b) in Verbindung bringen der ersten Energieversorgungseinheit durch die Wechselvorrichtung, c) Öffnen der mechanischen Verbindung zwischen der ersten Energieversorgungseinheit und dem Landfahrzeug, d) Entnehmen der ersten Energieversorgungseinheit aus dem Landfahrzeug mit der Wechselvorrichtung, e) Abtransportieren der ersten Energieversorgungseinheit aus dem Wechselbereich, vorher, gleichzeitig oder nachher, f) Beschicken der Wechselvorrichtung (30) mit der zweiten Energieversorgungseinheit, g) Einsetzen der zweiten Energieversorgungseinheit mit der Wechselvorrichtung in das Landfahrzeug, und gleichzeitig oder nachher h) Herstellen der mechanischen Verbindung zwischen der zweiten Energieversorgungseinheit und dem Landfahrzeug. Hierdurch kann schnell und einfach der Austausch einer Energieversorgungseinheit durchgeführt werden, wobei bei einer vorteilhaften Ausführung des Verfahrens zumindest die Schritte b) bis h) automatisiert durchgeführt werden.

Weitere Besonderheiten und Vorzüge der Erfindung ergeben sich aus der folgenden Beschreibung eines bevorzugten Ausführungsbeispiels anhand der Zeichnungen. Es zeigen:
- **Fig. 1**: eine schematische Ansicht einer teilweise geöffnet dargestellten ersten Ausführung einer erfindungsgemäßen Energieversorgungseinheit;
- **Fig. 2**: eine schematische Ansicht einer teilweise geöffnet dargestellten zweiten Ausführung einer erfindungsgemäßen Energieversorgungseinheit;
- **Fig. 3**: eine schematische Ansicht eines Ladevorgangs einer erfindungsgemäßen Energieversorgungseinheit in einem erfindungsgemäßen Landfahrzeug;
- **Fig. 4 a-g**: eine schematische Darstellung einer erfindungsgemäßen Austauschstation während unterschiedlicher Schritte des erfindungsgemäßen Verfahrens zum Austausch einer in einem Landfahrzeug enthaltenen Energieversorgungseinheit;
- **Fig. 5**: eine Detailansicht der Austauschstation aus Fig. 4 a).

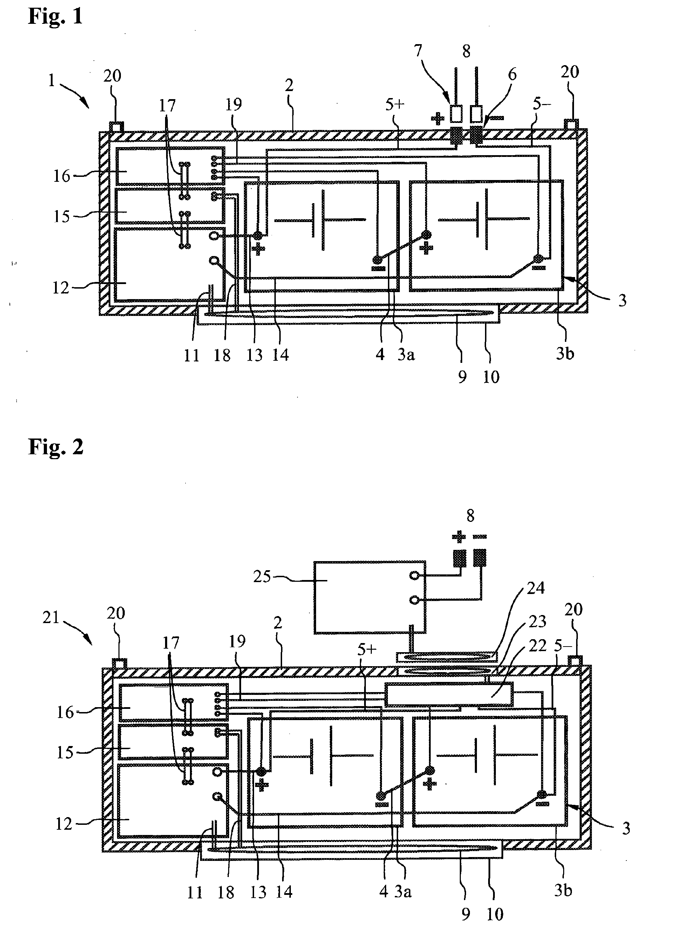

Fig. 1 zeigt eine erste Ausführung einer erfindungsgemäßen Energieversorgungseinheit 1, wobei ein an sich geschlossenes kastenförmiges Gehäuse 2 der Energieversorgungseinheit 1 aus Gründen der besseren Erläuterung der Erfindung teilweise aufgeschnitten dargestellt ist. Das Gehäuse 2 besteht aus einem vorzugsweise säurebeständigen Material, um gegebenenfalls bei Beschädigungen darin befindlicher Energiespeicher 3 ein Austreten giftiger Batteriesäuren oder -dämpfen zu verhindern. Das Gehäuse kann auch eine andere Form als die in den Zeichnungen gezeigte haben.

In der vorliegenden Ausführung besteht der Energiespeicher 3 aus einer wiederaufladbaren ersten Batterie 3a und zweiten Batterie 3b, jeweils mit Pluspol + und Minuspol -. Stattdessen können auch andere Energiespeicher zur Speicherung von elektrischer Energie verwendet werden, z.B. sog. Super-Caps oder eine Kombination aus wiederaufladbaren Batterien und Super-Caps. Zur Bereitstellung einer gewünschten Versorgungsspannung des Energiespeichers 3 ist der Minuspol der ersten Batterie 3a über eine Serienleitung 4 mit dem Pluspol der zweiten Batterie 3b verbunden. Vom Pluspol der ersten Batterie 3a und dem Minuspol der zweiten Batterie 3b führen Verbindungsleitungen 5+ bzw. 5 - zu einem als Kontaktanschluss 6 ausgebildeten Verbindungselement. Die Kontakte des Kontaktanschlusses 6 sind in Fig. 1 mit einem als kontaktierendem Bordnetzanschluss 7 ausgebildeten Verbindungsgegenstück eines in Fig. 1 nur angedeuteten Bordnetzes 8 elektrisch leitend verbunden. Somit kann Energie zwischen Energiespeicher 3 und Bordnetz 8 übertragen werden.

Zum Laden des Energiespeichers 3 von außerhalb des Fahrzeugs sieht die Erfindung eine am Gehäuse 2 fest angeordnete bzw. darin integrierte Sekundärspule 9 vor, welche vorliegend in einem eigenen Spulenkörper 10 vergossen ist. Der Spulenkörper 10 verhindert eine direkte Berührung der Sekundärspule 9. Die Sekundärspule 9 ist über eine Leistungsverbindung 11 mit einem Regler oder Gleichrichter 12 verbunden. Anstelle der vorliegend gezeigten einen kreisförmigen Sekundärspule 9 können auch andere Formen oder auch mehrere Sekundärspulen vorgesehen werden.

Der positive Ausgang des Gleichrichters 12 ist über eine positive Ladeleitung 14 mit dem Pluspol der ersten Batterie 3a und der negative Ausgang des Gleichrichters 12 über eine negative Ladeleitung 14 mit dem Minuspol der zweiten Batterie 3a elektrisch leitend verbunden. Mit dem Gleichrichter 12 wird die von der Sekundärspule 9 in Form von Wechselspannung und Wechselstrom gelieferte Energie in die für den Energiespeicher 3 und das Bordnetz 8 benötigte Gleichspannung bzw. Gleichstrom gewandelt. Die Ausbildung und Funktionsweise derartiger Regler oder Gleichrichter 12 ist hinlänglich bekannt.

Weiter enthält die Energieversorgungseinheit 1 eine Kommunikationsschnittstelle 15 sowie ein Batteriemanagementsystem 16, die beide über eine durchgeschleifte Versorgungsleitung 17 vom Gleichrichter 12 mit der jeweils notwendigen Versorgungsspannung versorgt werden.

Die Kommunikationsschnittstelle 15 ist über eine Kommunikationsleitung 18 mit der Sekundärspule 9 verbunden, um z.B. auf das Energieübertragungssignal aufmodulierte Kommunikationssignale auszuwerten. Hierdurch kann die Energieversorgungseinheit 1 von außen über die Sekundärspule 9 angesprochen werden. Gleichermaßen kann die Kommunikationsschnittstelle 15 Daten aus der Energieversorgungseinheit 1 oder ggf. dem Bordnetz 8 in umgekehrter Richtung über die Sekundärspule 9 nach außen übertragen.

Das Batteriemanagementsystem 16 ist über vier Batteriemanagementleitungen 19 mit den Plus- und Minuspolen der Batterien 3a, 3b des Energiespeichers 3 verbunden und überwacht den Ladezustand der Batterien 3a, 3b und steuert die Ladung und ggf. Entladung der Batterien 3a, 3b. Der Gleichrichter 12, die Kommunikationsschnittstelle 15 und das Batteriemanagementsystem 16 sind zum Datenaustausch miteinander verbunden, so dass z.B. das Batteriemanagementsystem 16 die Energieeinspeisung vom Gleichrichter 12 in die Batterien 3a, 3b steuern kann. Die Kommunikationsschnittstelle 15 hingegen kann hierdurch die in der Energieversorgungseinheit 1 und ggf. im Bordnetz 8 ermittelten Daten induktiv nach außen übertragen, um beispielsweise einer Ladestation den Energiebedarf sowie die Parameter des Energiespeichers 3 und der Energieversorgungseinheit 1 mitzuteilen.

Um die Energieversorgungseinheit 1 in einem Landfahrzeug sicher befestigen zu können, sind zwei Kupplungselemente in Form von am Gehäuse angeordneten und von diesem abstehende Laschen 20 vorgesehen. Die Laschen 20 greifen am Landfahrzeug in Vertiefungen, in denen als verschiebbare Bolzen ausgebildete Kupplungsgegenstücke automatisch durch die Laschen 20 hindurch geführt werden können, um die Energieversorgungseinheit 1 in allen Betriebssituationen sicher am Landfahrzeug zu halten.

Die in Fig. 2 gezeigte alternative Ausführung einer erfindungsgemäßen Energieversorgungseinheit 21 unterscheidet sich von der Energieversorgungseinheit 1 aus Fig. 1 lediglich durch die Art der Energieübertragungsverbindung zum Bordnetz 8, weshalb nachfolgend vor allem die Unterschiede erläutert werden. Gleiche Teile werden deshalb mit gleichen Bezugszeichen wie oben bezeichnet.

Im Gegensatz zur Ausführung der Energieversorgungseinheit 1 in Fig. 1 sind bei der Energieversorgungseinheit 21 nach Fig. 2 die Verbindungsleitungen 5+ und 5- nicht mit dem elektrisch leitenden Kontaktanschluss 6 zur Kontaktierung mit dem korrespondierenden Bordnetzanschluss 7 verbunden, sondern mit einem Wechselrichter 22. Der Wechselrichter 22 erzeugt aus den vom Energiespeicher 3 bereitgestellten Gleichspannung und Gleichstrom eine Wechselspannung und Wechselstrom zur Versorgung einer an seinem Ausgang als Verbindungselement angeschlossenen Bordnetz-Primärspule 23. Diese überträgt induktiv Energie an ein als Bordnetz-Sekundärspule 24 ausgebildetes Verbindungsgegenstück zur Energieversorgung des Bordnetzes 8. Fahrzeugseitig ist hierzu ein Gleichrichter 25 zwischen Bordnetz-Sekundärspule 24 und Bordnetz 8 geschaltet, der die über die Spulenanordnung 23, 24 übertragenen Wechselgrößen wieder in die für das Bordnetz 8 notwendigen Gleichgrößen umwandelt.

Hierdurch sind keinerlei elektrische Kontakte mehr notwendig, so dass Energieversorgungseinheit 21 vollständig gekapselt ausgeführt werden kann. Somit sind keine mechanisch betätigten Teile mehr vorhanden, was ein hohes Maß an Wartungsfreiheit und somit große Wartungsintervalle mit sich bringt. Zudem besteht keine Gefahr, dass durch Berührung der Anschlusskontakte 6 der Ausführung aus Fig. 1 eine Gefährdung für Personen oder Gegenstände besteht, so dass eine entsprechende Sicherung der Anschlusskontakte 6 entfällt. Hierdurch lässt sich der durch die Bordnetz-Primärspule 23, Bordnetz-Sekundärspule 24 sowie Wechselrichter 22 und Gleichrichter 25 erhöhte Aufwand rechtfertigen. Der durch eine derartige Anordnung verursachte Energieverlust hält sich aufgrund der hohen Wirkungsgrade heutiger Gleich- und Wechselrichter in akzeptablen Grenzen.

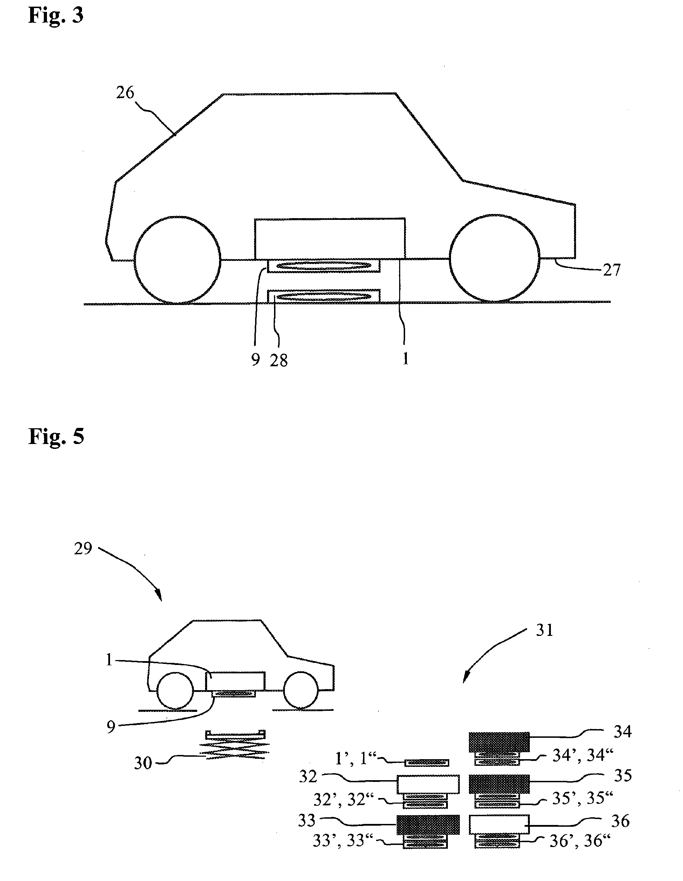

Fig. 3 zeigt ein erfindungsgemäßes Landfahrzeug 26, an dessen Unterseite 27 eine erfindungsgemäße Energieversorgungseinheit 1 angebracht ist. Das Landfahrzeug 26 befindet sich zur Aufladung der Energiespeicher 3 der Energieversorgungseinheit 1 in eingebautem Zustand über einer Primärspule 28 einer Ladestation.

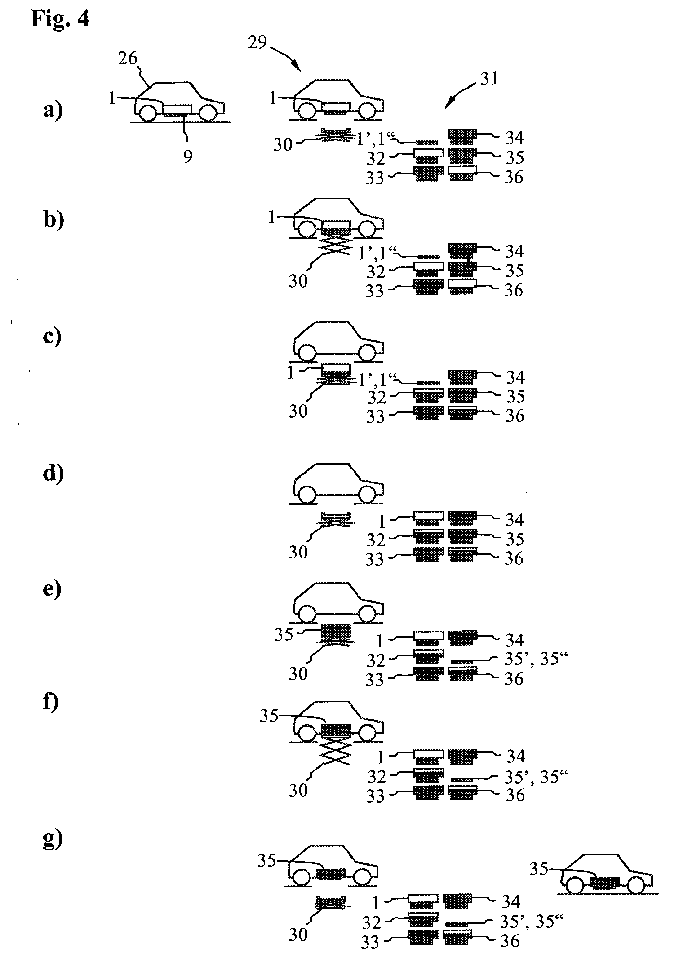

Fig. 4 zeigt eine schematische Darstellung einer erfindungsgemäßen Austauschstation 29 während unterschiedlicher Schritte des erfindungsgemäßen Verfahrens, anhand derer das erfindungsgemäße Verfahren zum Austausch einer in dem Landfahrzeug 26 angeordneten ersten Energieübertragungseinheit 1 nachfolgend erläutert wird.

In Fig. 4 a) ist links das in die Austauschstation 29 einfahrende Fahrzeug 26 mit fast vollständig entladener Energieversorgungseinheit 1 gezeigt. Soll das Fahrzeug 26 ohne lange Wartezeit weitergefahren werde, so muss die Energieversorgungseinheit 1 schnell in der Austauschstation 29 gewechselt werden. Fig. 5 zeigt die Austauschstation 29 aus Fig. 4 a) in vergrößerter Darstellung.

Die Austauschstation 29 weist eine unterhalb eines Wechselbereichs angeordnete Hubvorrichtung als Wechselvorrichtung 30 auf, welche in einer Grube unter Fahrspuren des Fahrzeugs 26 angeordnet und als Scherenhebelanordnung ausgebildet ist. Ein in Fig. 4 nicht dargestellter Hydraulikantrieb sorgt für das Anheben der Scherenhebelanordnung von der in Fig. 4 a) gezeigten Stellung in die in Fig. 4 b) gezeigte ausgefahrene Stellung. Anstelle eines Hydraulikantriebs können auch andere geeignete und an sich bekannte Antriebe verwendet werden. In der Austauschstation 29 sind in einem Lager 31 eine Vielzahl von erfindungsgemäßen Energieversorgungseinheiten 32 bis 36 gelagert und werden dort in jeweils zugehörigen Aufnahmen mit Lade-Primärspulen geladen. Exemplarisch sind in Fig. 5 die Aufnahme 1', 32' bis 36' mit jeweiligen Lade-Primärspulen 1", 32" bis 36" für die jeweiligen Energieversorgungseinheiten 1, 32 bis 36 detailliert dargestellt. Die in Fig. 4 nicht ausgefüllt gezeichneten Energieversorgungseinheiten 32 und 36 sind entladen und müssen erst wieder aufgeladen werden, während die Energieversorgungseinheiten 33 bis 35 geladen sind und sofort für den Austausch bereitstehen. Bei längerer Lagerung der geladenen Energieversorgungseinheiten 32 bis 35 müssen diese allenfalls ab und zu über die zugehörigen Lade-Primärspulen 32" bis 35" nachgeladen werden.

Nachdem das Fahrzeug 26 wie in der Mitte von Fig. 4 a) dargestellt in den Wechselbereich der Wechselvorrichtung 30 eingefahren und positioniert wurde, wird in Fig. 4 b) die Wechselvorrichtung 30 von unten an die Energieversorgungseinheit 1 heranbewegt und mit dieser in Verbindung gebracht. Anschließend wird die mechanische Verbindung zwischen Energieversorgungseinheit 1 und Landfahrzeug 26 geöffnet, die Energieversorgungseinheit 1 wird dann nur noch die Wechselvorrichtung 30 gehalten. Anschließend fährt die Wechselvorrichtung 30 von der in Fig. 4 b) gezeigten Stellung in die in Fig. 4 c) gezeigte Stellung herunter. Dies kann entweder angetrieben oder durch das Gewicht Energieversorgungseinheit 1 bewirkt werden.

Wie in Fig. 4 c) ebenfalls erkennbar, sind die Energieversorgungseinheiten 32 und 36 zwischenzeitlich wieder halb aufgeladen. Anschließend wird die Energieversorgungseinheit 1 aus der Wechselvorrichtung 30 entnommen und über einen nicht gezeigte Transportvorrichtung, beispielsweise ein Förderband, in das Lager 31 an die in Fig. 4 d) gezeigte freie Stelle oben links transportiert. Dort wird die Energieversorgungseinheit 1 in eine Aufnahme 1' mit einer Lade-Primärspule 1" (sieh Fig. 5) zur induktiven Energieübertragung an die Sekundärspule 9 der Energieversorgungseinheit 1 abgelegt. Sobald die Energieversorgungseinheit 1 abgelegt ist, beginnt automatisch ihre Aufladung.

Anschließend wird die die Energieversorgungseinheit 35 über die Transportvorrichtung vom Lager 31 zur Wechselvorrichtung 30 transportiert, wo sie in Fig. 4 e) auf die Wechselvorrichtung 30 aufgelegt wird. Um den Austausch noch zu beschleunigen, kann bereits vor oder während des Einfahrens des Landfahrzeugs 26 oder während der Herausnahme der Energieversorgungseinheit 1 aus dem Landfahrzeug 26 die voll aufgeladene Energieversorgungseinheit 35 zur Wechselvorrichtung 20 transportiert und dort in einer Wartestellung eingestellt werden. Beispielsweise kann die voll aufgeladene Energieversorgungseinheit 35 vorteilhaft aufgrund eines vor oder während des Einfahrens des Landfahrzeugs 26 von diesem an die Austauschstation 29 gesendeten Anforderungssignals bereits bei der Wechselvorrichtung 20 bereitgestellt werden. Auch kann die Wechselvorrichtung so ausgebildet sein, z.B. mit zwei Hubvorrichtungen 30, dass unmittelbar nach Herausnahme der entladenen Energieversorgungseinheit 1 aus dem Landfahrzeug 26 die geladene Energieversorgungseinheit 35 sofort in das Landfahrzeug 26 eingesetzt wird und der Wegtransport der entladenen Energieversorgungseinheit 1 erst danach erfolgt, um einen möglichst schnellen Wechsel der Energieversorgungseinheit 1 bzw. 35 zu ermöglichen.

Anschließend wird die Energieversorgungseinheit 35 in Fig. 4 f) durch die Wechselvorrichtung 30 nach oben zum Landfahrzeug 26 angehoben und darin eingesetzt. Dann wird die Energieversorgungseinheit 35 mittels ihrer Kupplungselemente 20 und der entsprechenden Kupplungsgegenstücke am Landfahrzeug 26 fest an dieses angekoppelt. Nachfolgend wird, wie in Fig. 4 g) in der Mitte erkennbar, die Wechselvorrichtung 30 wieder in ihre abgesenkte Stellung gefahren, während das Landfahrzeug 26 mit der vollständig aufgeladenen Energieversorgungseinheit 35 aus der Austauschstation 29 herausfährt.

Im Hinblick darauf, dass der Austausch der Energieversorgungseinheit 1 bei der in Fig. 4 gezeigten Ausführung voll automatisch erfolgt, dauert der oben beschriebene Austauschvorgang nicht länger als ein üblicher Tankvorgang bei kraftstoffbetriebenen Landfahrzeugen. Durch die spezielle Ausbildung der erfindungsgemäßen Energieversorgungseinheit wird nicht nur der schnelle Austausch und Ausbau aus dem Fahrzeug 26 ermöglicht, sondern auch das sofortige Wiederaufladen in der Austauschstation 29, ohne zusätzliche Handgriffe oder elektrische Kontaktierungen vornehmen zu müssen.

## Patentansprüche

1. Energieversorgungseinheit (21) zur Versorgung eines elektrischen Bordnetz (8) eines Landfahrzeugs (26), insbesondere Radfahrzeugs, mit einem wiederaufladbaren elektrischen Energiespeicher (3) und einer mit diesem verbundenen Sekundärspule (9) zur induktiven Energieübertragung zwischen Sekundärspule (9) und einer Primärspule (28) einer Ladestation, wobei die Energieversorgungseinheit (21) als austauschbare Gesamteinheit mit einem Verbindungselement (6; 23) zur Verbindung mit einem am Landfahrzeug (26) angeordneten Verbindungsgegenstück (7; 24) zur Energieübertragung zwischen Energieversorgungseinheit (21) und Bordnetz (8) ausgebildet ist, **dadurch gekennzeichnet, dass** das Verbindungselement eine Bordnetz-Primärspule (23) zur induktiven Energieübertragung zwischen der Bordnetz-Primärspule (23) und dem als Bordnetz-Sekundärspule (24) ausgebildeten Verbindungsgegenstück ist.

2. Energieversorgungseinheit (21) nach Anspruch 1, **dadurch gekennzeichnet, dass** sie mindestens ein Kupplungselement (20) zur schnellen mechanischen Verbindung mit mindestens einem am Landfahrzeug (26) vorgesehenen Kupplungsgegenstück aufweist.

3. Energieversorgungseinheit (21) nach Anspruch 2, **dadurch gekennzeichnet, dass** das Kupplungselement durch eine von einem Gehäuse (2), in dem der Energiespeicher (3) und in oder an dem die Sekundärspule (9) vorgesehen sind, abstehende Lasche (20) und/oder durch einen in einer Vertiefung des Gehäuses (2) umgreifbar angeordneten Zapfen gebildet ist.

4. Energieversorgungseinheit (21) nach einem der voranstehenden Ansprüche, **dadurch gekennzeichnet, dass** sie mindestens ein Positionierelement zum Eingriff in mindestens ein am Landfahrzeug (26) angeordnetes Positioniergegenstück aufweist.

5. Landfahrzeug, insbesondere Radfahrzeug, mit einem elektrischen Bordnetz (8), **dadurch gekennzeichnet, dass** es zur Aufnahme einer Energieversorgungseinheit (21) nach einem der voranstehenden Ansprüche ausgebildet ist und ein Verbindungsgegenstück (7; 24) zur Verbindung mit dem Verbindungselement (6; 23) der Energieversorgungseinheit (21) aufweist, wobei das Verbindungsgegenstück eine Bordnetz-Sekundärspule (24) zur induktiven Energieübertragung zwischen der Bordnetz-Sekundärspule (24) und dem als Bordnetz-Primärspule (23) ausgebildeten Verbindungselement nach Anspruch 1 ist.

6. Landfahrzeug (26) nach Anspruch 5, **dadurch gekennzeichnet, dass** es mindestens ein Kupplungsgegenstück zur schnellen mechanischen Verbindung mit mindestens einem Kupplungselement (20) der Energieversorgungseinheit (21) aufweist.

7. Landfahrzeug (26) nach Anspruch 6, **dadurch gekennzeichnet, dass** das Kupplungsgegenstück zum automatischen Öffnen und Lösen der mechanischen Verbindung ansteuerbar ist.

8. Landfahrzeug (26) nach einem der Ansprüche 5 bis 7, **dadurch gekennzeichnet, dass** es mindestens ein Positioniergegenstück zum Eingriff in mindestens ein Positionierelement der Energieversorgungseinheit (21) aufweist.

9. Austauschstation (29) zum Austausch einer in einem Landfahrzeug (26) nach einem der Ansprüche 5 bis 8 enthaltenen ersten Energieversorgungseinheit (21) nach einem der Ansprüche 1 bis 4 durch eine in einem Lager (31) der Austauschstation (29) bevorratete zweite Energieversorgungseinheit (35) nach einem der Ansprüche 1 bis 4, mit einer bodenseitig angeordneten Wechselvorrichtung (30) zur Entnahme der ersten Energieversorgungseinheit (21) vom Landfahrzeug und zur Übergabe der ersten Energieversorgungseinheit (21) an eine Transportvorrichtung zum Transport der ersten Energieversorgungseinheit (21) in das Lager (31) und der zweiten Energieversorgungseinheit (35) aus dem Lager (31) zur Wechselvorrichtung.

10. Austauschstation (29) nach Anspruch 9, **dadurch gekennzeichnet, dass** im Lager (31) mindestens eine Aufnahme (1', 32'-36') mit einer Lade-Primärspule (1", 32"-36") zur induktiven Energieübertragung zwischen der Lade-Primärspule (1", 32"-36") und der Sekundärspule (9, 32"-36") einer in der Aufnahme gelagerten Energieversorgungseinheit (1, 32-36) vorgesehen ist.

11. Austauschstation (29) nach einem der Ansprüche 9 oder 10, **dadurch gekennzeichnet, dass** die Wechselvorrichtung (30) eine in einer zwischen zwei Fahrspuren für ein zweispuriges Landfahrzeug (26) verlaufenden Grube angeordnete Hubvorrichtung mit einer vertikal verfahrbaren Auflage (30') für die Energieversorgungseinheit (21) aufweist.

12. Austauschstation (29) nach einem der Ansprüche 9 bis 11, **dadurch gekennzeichnet, dass** eine Steuervorrichtung zum automatisierten Wechseln einer Energieversorgungseinheit (21) eines Landfahrzeugs (26) in der Austauschstation (29) vorgesehen ist.

13. Verfahren zum Austausch einer in einem Landfahrzeug (26) nach einem der Ansprüche 5 bis 8 enthaltenen ersten Energieversorgungseinheit (21) nach einem der Ansprüche 1 bis 4 durch eine zweite Energieversorgungseinheit (35) nach einem der Ansprüche 1 bis 4, insbesondere in einer Austauschstation (29) nach einem der Ansprüche 9 bis 12, mit den folgenden Schritten:
a) Positionieren des Landfahrzeugs (26) in einem Wechselbereich einer Wechselvorrichtung (30),
b) in Verbindung bringen der ersten Energieversorgungseinheit (21) durch die Wechselvorrichtung (30),
c) Öffnen der mechanischen Verbindung zwischen der ersten Energieversorgungseinheit (21) und dem Landfahrzeug (26),
d) Entnehmen der ersten Energieversorgungseinheit (21) aus dem Landfahrzeug (26) mit der Wechselvorrichtung (30),
e) Abtransportieren der ersten Energieversorgungseinheit (21) aus dem Wechselbereich, vorher, gleichzeitig oder nachher
f) Beschicken der Wechselvorrichtung (30) mit der zweiten Energieversorgungseinheit (35),
g) Einsetzen der zweiten Energieversorgungseinheit (35) mit der Wechselvorrichtung (30) in das Landfahrzeug (26), und gleichzeitig oder nachher
h) Herstellen der mechanischen Verbindung zwischen der zweiten Energieversorgungseinheit (35) und dem Landfahrzeug (26).

14. Verfahren nach Anspruch 13, **dadurch gekennzeichnet, dass** zumindest die Schritte b) bis h) automatisiert durchgeführt werden.

15. Verfahren nach einem der Ansprüche 13 bis 14, **dadurch gekennzeichnet, dass** unmittelbar vor, während oder unmittelbar nach Schritt c) die induktive Verbindung zwischen der ersten Energieversorgungseinheit (21) und Landfahrzeug (26) getrennt wird.

16. Verfahren nach einem der Ansprüche 13 bis 15, **dadurch gekennzeichnet, dass** während oder unmittelbar nach Schritt h) die induktive Verbindung zwischen der zweiten Energieversorgungseinheit (35) und dem Landfahrzeug (26) hergestellt wird.

## Claims

1. Power supply unit (21) for supplying a vehicle electrical system (8) of a land vehicle (26), in particular a wheeled vehicle, with a rechargeable electrical power storage unit (3) and a secondary coil (9) connected to the latter for inductive transfer of power between the secondary coil (9) and a primary coil (28) of a charging station, wherein the power supply unit (21) is embodied as an interchangeable complete unit with a connecting element (6; 23) for connection with a connection counterpart (7; 24) arranged on the land vehicle (26) for transfer of power between the power supply unit (21) and the vehicle electrical system (8), **characterised in that** the connecting element is a vehicle electrical system primary coil (23) for inductive transfer of power between the vehicle electrical system primary coil (23) and the connection counterpart embodied as a vehicle electrical system secondary coil (24).

2. Power supply unit (21) according to claim 1, **characterised in that** it exhibits at least one coupling element (20) for rapid mechanical connection with at least one coupling counterpart provided on the land vehicle (26).

3. Power supply unit (21) according to claim 2, **characterised in that** the coupling element is formed by a shackle (20) protruding from a housing (2) in which the power storage unit (3) is accommodated and in or on which the secondary coil (9) is provided, and/or by a pin arranged in a recess in the housing (2) so that it can be grasped.

4. Power supply unit (21) according to one of the preceding claims, **characterised in that** it exhibits at least one positioning element for engagement in at least one positioning element counterpart arranged on the land vehicle (26).

5. Land vehicle, in particular wheeled vehicle, with a vehicle electrical system (8), **characterised in that** it is designed to accommodate a power supply unit (21) according to one of the preceding claims and exhibits a connection counterpart (7; 24) for connection with the connecting element (6; 23) of the power supply unit (21), wherein the connection counterpart is a vehicle electrical system secondary coil (24) for inductive transfer of power between the vehicle electrical system secondary coil (24) and the connecting element embodied as a vehicle electrical system primary coil (23) according to claim 1.

6. Land vehicle (26) according to claim 5, **characterised in that** it exhibits at least one coupling counterpart for rapid mechanical connection with at least one coupling element (20) of the power supply unit (21).

7. Land vehicle (26) according to claim 6, **characterised in that** the coupling counterpart can be actuated to open and release the mechanical connection automatically.

8. Land vehicle (26) according to one of claims 5 to 7, **characterised in that** it exhibits at least one positioning counterpart for engagement in at least one positioning element of the power supply unit (21).

9. Exchange station (29) for exchange of a first power supply unit (21) according one of claims 1 to 4 contained in a land vehicle (26) according to one of claims 5 to 8 for a second power supply unit (35) according to one of claims 1 to 4 stocked in a store (31) of the exchange station (29) with a changing device (30) arranged on the ground side for extracting the first power supply unit (21) from the land vehicle and transferring the first power supply unit (21) to a conveyor for transporting the first power supply unit (21) into the store (31) and transporting the second power supply unit (35) from the store (31) to the changing device.

10. Exchange station (29) according to claim 9, **characterised in that** in the store (31) there is provided at least one receptacle (1', 32'-36') with a charging primary coil (1", 32"-36") for inductive transfer of power between the charging primary coil (1", 32"-36") and the secondary coil (9, 32"-36") of a power supply unit (1, 32-36) held in the receptacle.

11. Exchange station (29) according to one of claims 9 or 10, **characterised in that** the changing device (30) exhibits a lifting device which is arranged in a pit running between two tracks for a two-track land vehicle (26) and has a support (30') which can be moved vertically for the power supply unit (21).

12. Exchange station (29) according to one of claims 9 to 11, **characterised in that** a control device is provided for automated changing of a power supply unit (21) of a land vehicle (26) in the exchange station (29).

13. Method for exchange of a first power supply unit (21) according to one of claims 1 to 4 contained in a land vehicle (26) according to one of claims 5 to 8 for a second power supply unit (35) according to one of claims 1 to 4, in particular in an exchange station (29) according to one of claims 9 to 12, with the following steps:
a) positioning of the land vehicle (26) in a changing area of a changing device (30),
b) attachment of the first power supply unit (21) by the changing device (30),
c) opening of the mechanical connection between the first power supply unit (21) and the land vehicle (26),
d) extraction of the first power supply unit (21) from the land vehicle (26) with the changing device (30),
e) removal of the first power supply unit (21) from the changing area, beforehand, at the same time or afterwards
f) loading of the changing device (30) with the second power supply unit (35),
g) insertion of the second power supply unit (35) into the land vehicle (26) with the changing device (30), and at the same time or afterwards
h) production of the mechanical connection between the second power supply unit (35) and the land vehicle (26).

14. Method according to claim 13, **characterised in that** at least steps b) to h) are automated.

15. Method according to one of claims 13' to 14, **characterised in that** the inductive connection between the first power supply unit (21) and the land vehicle (26) is broken immediately before, during or immediately after step c).

16. Method according to one of claims 13 to 15, **characterised in that** the inductive connection between the second power supply unit (35) and the land vehicle (26) is produced during or immediately after step h).

## Revendications

1. Unité d'alimentation électrique (21) pour l'alimentation d'un réseau de bord électrique (8) d'un véhicule terrestre (26), en particulier un véhicule à roues, avec un accumulateur d'énergie (3) électrique rechargeable et une bobine secondaire (9) reliée à celui-ci pour la transmission d'énergie inductive entre la bobine secondaire (9) et une bobine primaire (28) d'un poste de chargement, l'unité d'alimentation électrique (21) étant réalisée comme une unité globale interchangeable avec un élément de liaison (6 ; 23) pour la liaison avec une pièce antagoniste de liaison (7 ; 24) agencée sur le véhicule terrestre (26) pour la transmission d'énergie entre l'unité d'alimentation électrique (21) et le réseau de bord (8), **caractérisée en ce que** l'élément de liaison est une bobine primaire de réseau de bord (23) pour la transmission d'énergie inductive entre la bobine primaire de réseau de bord (23) et la pièce antagoniste de liaison réalisée comme une bobine secondaire de réseau de bord (24).

2. Unité d'alimentation électrique (21) selon la revendication 1, **caractérisée en ce qu'**elle présente au moins un élément de couplage (20) pour la liaison mécanique rapide avec au moins une pièce antagoniste de couplage prévue sur le véhicule terrestre (26).

3. Unité d'alimentation électrique (21) selon la revendication 2, **caractérisée en ce que** l'élément de couplage est formé par une languette (20) dépassant d'un boîtier (2), dans lequel l'accumulateur d'énergie (3) et dans ou sur lequel la bobine secondaire (9) sont prévus, et/ou par un tenon agencé de manière enveloppante dans une cavité du boîtier (2).

4. Unité d'alimentation électrique (21) selon l'une quelconque des revendications précédentes, **caractérisée en ce qu'**elle présente au moins un élément de positionnement pour l'engagement dans au moins une pièce antagoniste de positionnement agencée sur le véhicule terrestre (26).

5. Véhicule terrestre, en particulier véhicule à roues avec un réseau de bord électrique (8), **caractérisé en ce qu'**il est réalisé pour la réception d'une unité d'alimentation électrique (21) selon l'une quelconque des revendications précédentes et présente une pièce antagoniste de liaison (7 ; 24) pour la liaison avec l'élément de liaison (6 ; 23) de l'unité d'alimentation électrique (21), la pièce antagoniste de liaison étant une bobine secondaire de réseau de bord (24) pour la transmission d'énergie inductive entre la bobine secondaire de réseau de bord (24) et l'élément de liaison réalisé comme bobine primaire de réseau de bord (23) selon la revendication 1.

6. Véhicule terrestre (26) selon la revendication 5, **caractérisé en ce qu'**il présente au moins une pièce antagoniste de couplage pour la liaison mécanique rapide avec au moins un élément de couplage (20) de l'unité d'alimentation électrique (21).

7. Véhicule terrestre (26) selon la revendication 6, **caractérisé en ce que** la pièce antagoniste de couplage peut être commandée pour l'ouverture et le détachement automatiques de la liaison mécanique.

8. Véhicule terrestre (26) selon l'une quelconque des revendications 5 à 7, **caractérisé en ce qu'**il présente au moins une pièce antagoniste de positionnement pour l'engagement dans au moins un élément de positionnement de l'unité d'alimentation électrique (21).

9. Poste d'échange (29) pour l'échange d'une première unité d'alimentation électrique (21) selon l'une quelconque des revendications 1 à 4 contenue dans un véhicule terrestre (26) selon l'une quelconque des revendications 5 à 8 contre une seconde unité d'alimentation électrique (35) stockée dans un magasin (31) du poste d'échange (29) selon l'une quelconque des revendications 1 à 4, avec un dispositif de changement (30) agencé sur le fond pour le retrait de la première unité d'alimentation électrique (21) du véhicule terrestre et pour la transmission de la première unité d'alimentation électrique (21) à un dispositif de transport pour le transport de la première unité d'alimentation électrique (21) dans le magasin (31) et de la seconde unité d'alimentation électrique (35) hors du magasin (31) jusqu'au dispositif de changement.

10. Poste d'échange (29) selon la revendication 9, **caractérisé en ce qu'**au moins un logement (1', 32'-36') est prévu dans le magasin (31) avec une bobine primaire de chargement (1'', 32''-36'') pour la transmission d'énergie inductive entre la bobine primaire de chargement (1'', 32''-36'') et la bobine secondaire (9, 32''-36'') d'une unité d'alimentation électrique (1, 32-36) logée dans le logement.

11. Poste d'échange (29) selon l'une quelconque des revendications 9 ou 10, **caractérisé en ce que** le dispositif de changement (30) présente un dispositif de levage agencé dans une fosse s'étendant entre deux voies de circulation pour un véhicule terrestre (26) à deux voies avec un support (30') déplaçable verticalement pour l'unité d'alimentation électrique (21).

12. Poste d'échange (29) selon l'une quelconque des revendications 9 à 11, **caractérisé en ce qu'**un dispositif de commande est prévu pour le changement automatisé d'une unité d'alimentation électrique (21) d'un véhicule terrestre (26) dans le poste d'échange (29).

13. Procédé d'échange d'une première unité d'alimentation électrique (21) selon l'une quelconque des revendications 1 à 4 contenue dans un véhicule terrestre (26) selon l'une quelconque des revendications 5 à 8 contre une seconde unité d'alimentation électrique (35) selon l'une quelconque des revendications 1 à 4, en particulier dans un poste d'échange (29) selon l'une quelconque des revendications 9 à 12, avec les étapes suivantes :
a) le positionnement du véhicule terrestre (26) dans une zone de changement d'un dispositif de changement (30),
b) l'amenée en liaison de la première unité d'alimentation électrique (21) par le dispositif de changement (30),
c) l'ouverture de la liaison mécanique entre la première unité d'alimentation électrique (21) et le véhicule terrestre (26),
d) le retrait de la première unité d'alimentation électrique (21) du véhicule terrestre (26) avec le dispositif de changement (30),
e) le transport de la première unité d'alimentation électrique (21) de la zone de changement avant, pendant ou après,
f) le chargement du dispositif de changement (30) avec la seconde unité d'alimentation électrique (35),
g) l'insertion de la seconde unité d'alimentation électrique (35) avec le dispositif de changement (30) dans le véhicule terrestre (26) et, pendant ou après,
h) l'établissement de la liaison mécanique entre la seconde unité d'alimentation électrique (35) et le véhicule terrestre (26).

14. Procédé selon la revendication 13, **caractérisé en ce qu'**au moins les étapes b) à h) sont réalisées de manière automatisée.

15. Procédé selon l'une quelconque des revendications 13 à 14, **caractérisé en ce que** directement avant, pendant ou directement après l'étape c), la liaison inductive entre la première unité d'alimentation électrique (21) et le véhicule terrestre (26) est séparée.

16. Procédé selon l'une quelconque des revendications 13 à 15, **caractérisé en ce que**, pendant ou directement après l'étape h), la liaison inductive entre la seconde unité d'alimentation électrique (35) et le véhicule terrestre (26) est établie.
